# EUROPÄISCHE PATENTANMELDUNG

(11) **EP 3 668 036 A1**
(43) Veröffentlichungstag der Anmeldung: **17.06.2020**
(21) Anmeldenummer: 18212701.9
(22) Anmeldetag: 14.12.2018
(51) Int. Cl.: H04L 29/06, H04W 12/10

(54) **ERSTELLEN EINER BLOCKCHAIN MIT BLÖCKEN UMFASSEND EINE ANPASSBARE ANZAHL AN TRANSAKTIONSBLÖCKEN UND MEHRERE ZWISCHENBLÖCKE**

(71) Anmelder: Siemens Aktiengesellschaft, 80333 München (DE)
(72) Erfinder: Thurau, Oliver, 67117 Limburgerhof (DE)

(57) **Zusammenfassung**

Die Erfindung betrifft ein computerimplementiertes Verfahren zum Erstellen einer Blockchain mit Blöcken umfassend eine anpassbare Anzahl an Transaktionsblöcken und mehrere Zwischenblöcke sowie ein Speichermedium eines an einem verteilten Datenbanksystem teilnehmenden Gerätes aufweisend eine solche Blockchain.

Dabei ist ein erster Zwischenblock vorgesehen und es wird mindestens ein zweiter Zwischenblock generiert wird, wobei der zweite Zwischenblock einen ihm vorhergehenden Block sowie mindestens den ersten Zwischenblock referenziert.

## Beschreibung

Die Erfindung betrifft ein computerimplementiertes Verfahren zum Erstellen einer Blockchain mit Blöcken umfassend eine anpassbare Anzahl an Transaktionsblöcken und mehrere Zwischenblöcke sowie ein Speichermedium eines an einem verteilten Datenbanksystem teilnehmenden Gerätes aufweisend eine solche Blockchain.

Im industriellen Umfeld besteht vermehrt ein Interesse, Daten, welche das Gerät selbst oder ein Automatisierungssystem, in welchem sich das Gerät befindet, betreffen oder Daten eines Prozesses, welcher in einem Automatisierungssystem des Gerätes durchlaufen wird, gesichert auf dem Gerät zu hinterlegen. Dabei sind insbesondere Qualitätsdaten aus einer Automatisierungssteuerung oder vorgenommene Bedienaktionen oder eine Historie erfasster Zustandsdaten von Interesse. Für ein manipulationsgeschütztes Hinterlegen solcher Daten auf einem Gerät bietet sich eine Blockchain an und das Zurückgreifen auf ein Blockchain-Netzwerk.

Dabei nutzt man im industriellen Umfeld beispielsweise eine sog. öffentliche oder Public Blockchain oder eine Private Blockchain. Bei einer Public Blockchain ist das Konsensus-Verfahren öffentlich, d.h. eine unbekannte Nutzergruppe, beispielsweise im öffentlichen Internet, kann eine Blockchain bestätigen oder validieren oder genauer gesagt einzelne Blöcke durch sogenanntes Mining validieren. Bei der privaten Blockchain findet das Konsensus-Verfahren innerhalb eines Konsortiums statt, dessen Mitglieder beispielsweise einander oder einer Verwaltungsinstanz bekannt sind oder ein bestimmtes Vertrauensniveau erfüllen.

Die Blockchain-Technologie realisiert eine verteilte, dezentrale Datenbank, in der von teilnehmenden Knoten generierte Transaktionen manipulationsgeschützt ablegbar sind. Dafür werden Transaktionen in einem Block hinterlegt und ein Block wird mittels eines Prüfsummenverfahrens mit einem nachfolgenden Block verkettet. Eine Erläuterung der Blockchain-Technologie ist beispielsweise der englischsprachigen Wikipedia https://en.wikipedia.org/wiki/Blockchain zu entnehmen. In einem Block ist neben einer oder mehreren Transaktionen beispielsweise ein Hashwert des Vorgängerblockes hinterlegt. Der Block wird von dem Knoten, der ihn generiert hat, an das Blockchain-Netzwerk gesendet. Der Schutz entsteht durch eine Mehrheit von vertrauenswürdigen Knoten in einem Blockchain-Netzwerk, welche ein Validieren von Blöcken durchführen. Im Netz der an einer Blockchain teilnehmenden Knoten wird in regelmäßigen Abständen ein neuer Block gebildet und dabei der Hash-Wert eines bestehenden Blockes mithinterlegt. Falls keine Transaktion in einem Intervall vorliegt, so wird bei manchen Blockchains auf die Erstellung des Blocks verzichtet.

Somit speichert eine Blockchain die Transaktionen, die zum Bestätigen in die Blockchain gegeben wurden oder dem Blockchain-Netzwerk bereitgestellt wurden. Werden die Blöcke in dem jeweiligen Konsensus-Verfahren bestätigt, wächst die gültige Blockchain mit jedem bestätigten Block hinsichtlich ihrer Länge und damit der Größe. Der Speicherplatzbedarf einer fortgeführten oder bestätigten Blockchain wächst somit immer weiter an.

Da eine Prüfsumme, insbesondere ein Hashwert, des Vorgängerblockes in einen jeweiligen neuen Block eingefügt wird, bildet sich eine Kette. Die Prüfsumme des Vorgängerblockes bildet zusammen mit der Transaktion des aktuellen Blocks wiederum den Datensatz für die Prüfsumme des nachfolgenden Blocks. Man sagt auch ein Block referenziert den vorhergehenden Block. Die Transaktionen sind somit vor Manipulationen geschützt, da eine Kette bis zu einem initialen Block, auch Genesis-Block genannt, durch die Verkettung der Blöcke nachvollzogen werden kann. Da die Transaktionen über das Blockchain-Netz verfügbar sind, kann nachvollzogen werden, ab welchem Block in der Kette beispielsweise ein Inhalt einer Transaktion nicht mehr mit vorherigen Versionen übereinstimmt. Transaktionen sind also manipulationsgeschützt in jeder verifizierten Blockchain hinterlegt. Ein Abändern einer Transaktion in einem Block, der bereits zu einem früheren Zeitpunkt im Netzwerk gebildet wurde, würde nachvollzogen werden können, wenn eine Prüfsummenbildung über die bestehenden Blöcke nachgerechnet oder geprüft wird. Aufgrund der stetig anwachsenden Anzahl an Blöcken innerhalb einer Blockchain besteht beim Einsatz der Blockchain-Technologie in Geräten mit beschränkten Ressourcen das Risiko, dass auf Dauer nicht genügend Speicherplatz vorhanden ist. Beispielsweise sind die Speicherplatz-Ressourcen bei Automatisierungsgeräten, HMI-Geräten oder Edge-Geräten oder IoT-Geräten im Gegensatz zu Cloud-basierten Systemen eingeschränkt.

Vor diesem Hintergrund ist es eine Aufgabe der vorliegenden Erfindung, eine Verwendung einer Blockchain derart vorzusehen, dass der Speicherplatzbedarf für eine Blockchain auf einem Knoten reduziert werden kann.

Diese Aufgabe wird durch den Gegenstand der unabhängigen Ansprüche gelöst. Vorteilhafte Ausgestaltungen sind in den abhängigen Ansprüchen angegeben.

Die Erfindung betrifft ein computerimplementiertes Verfahren zum Erstellen einer Blockchain mit Blöcken umfassend eine anpassbare Anzahl an Transaktionsblöcken und mehrere Zwischenblöcke,
- wobei die Blockchain Bestandteil eines verteilten Datenbanksystems ist;
- wobei Blöcke innerhalb der Blockchain generiert werden und ein jeweiliger Block einen jeweiligen vorhergehenden Block referenziert,
- wobei ein erster Zwischenblock vorgesehen ist;
- wobei mindestens ein zweiter Zwischenblock generiert wird;
- wobei der zweite Zwischenblock einen ihm vorhergehenden Block sowie mindestens den ersten Zwischenblock referenziert.

Die Blockchain ist Bestandteil eines verteilten Datenbanksystems. Verteiltes Datenbanksystem bedeutet dabei, dass die Informationen der Datenbank, insbesondere die Kette in Form einer Blockchain, an mehreren Orten oder bei mehreren Teilnehmern verfügbar oder speicherbar sind. Das Prinzip einer Blockchain in einem verteilten Datenbank-System beruht darauf, dass die Information aus der Blockchain dezentral vorliegt. Teilnehmer des verteilten Datenbank-Systems können an der Erstellung neuer Blockchains mitwirken oder Blockchains überprüfen oder verifizieren. Ferner kann ein Teilnehmer auch lediglich auf eine oder mehrere Blockchains zugreifen oder einen oder mehrere einzelne Blöcke einer Blockchain verwenden.

Als Blöcke sind gemäß der vorliegenden Anmeldung Transaktionsblöcke sowie Zwischenblöcke vorgesehen. Ein Transaktionsblock, der einen vorhergehenden Transaktionsblock referenziert, ist aus dem Stand der Technik bekannt. Insbesondere erfolgt durch das Erstellen eines Transaktionsblockes mit einem Übergeben einer Transaktion in das verteilte Datenbanksystem und dem Verketten mit bestehenden Transaktionsblöcken der Aufbau einer Blockchain. Auf diese Weise wird eine bestehende Blockchain-Kette quasi fortgesetzt oder erweitert.

Durch das Wählen eines referenzierten Blockes in einer Blockchain-Kette wird festgelegt, an welcher Stelle oder basierend auf welcher letzten Transaktion oder welchem letzten Block die Kette fortgesetzt wird. Insbesondere ist die Wahl des Blockes, der beim Erstellen einer Blockchain referenziert wird, beliebig möglich. Vorteilhafterweise wird der aktuellste durch das verteilte Datenbanksystem bestätigte Block für das Referenzieren gewählt. Auf diese Weise werden in ihrer Gültigkeit bestätigte oder validierte Ketten effizient erweitert.

Es wird nun vorgeschlagen, mindestens einen Zwischenblock zu generieren. Ein Zwischenblock weist neben der regulären Referenzierung des Vorgängerblocks eine zweite Referenzierung auf, und zwar eine auf einen Vorgänger-Zwischenblock. Unter dem Begriff Referenzierung ist beispielsweise die Verkettung mit einem anderen Block oder das Einbinden eines anderen Blocks mittels Prüfsummenbildung über den eingebundenen oder verketteten Block zu verstehen. Durch diese doppelte Referenzierung ist es möglich, die so erzeugte und durch das dezentrale Blockchain-Netzwerk bestätigte Blockchain auf flexible Weise zu validieren: einerseits kann ein vollständiges Nachvollziehen der erzeugten Blöcke, insbesondere aller erzeugten Blöcke, durchgeführt werden. Ebenso kann die Kette auf Basis der Zwischenblöcke und deren Referenzen auf vorherige Zwischenblöcke nachvollzogen werden. Blöcke, die zwischen zwei Zwischenblöcken liegen, insbesondere Transaktionsblöcke, können bei der Validierung ausgelassen werden, wenn die Unversehrtheit der Kette über die Zwischenblöcke nachvollzogen wird.

Es wird beispielsweise in einer Kette aus Transaktionsblöcken ein zweiter Zwischenblock generiert. Der zweite Zwischenblock wird derart erstellt, dass er quasi regulär einen vorhergehenden Block referenziert. D.h. der zweite Zwischenblock wird als Block innerhalb der Blockchain generiert, in dem er eine bestehende Blockchain-Kette erweitert oder fortsetzt.

Zusätzlich referenziert der zweite Zwischenblock mindestens den ersten Zwischenblock. Der zweite Zwischenblock umfasst somit mindestens zwei Referenzen. Dabei handelt es sich beispielsweise um die Prüfsummen zweier unterschiedlicher Status der Blockchain. Einerseits wird durch das Verketten des vorhergehenden Blockes die Blockchain in üblicher Weise fortgesetzt. Der vorhergehende Block ist insbesondere ein regulärer Transaktionsblock.

Über den direkten vorhergehenden Block umfasst der zweite Zwischenblock eine Prüfsumme der Blockchain-Kette bis zu dem zweiten Zwischenblock selbst. Zudem umfasst der zweite Zwischenblock auch eine Prüfsumme der Blockchain zum Status eines generierten ersten Zwischenblocks. Beispielsweise ist dies der Zustand der Blockchain nach Erstellung oder nach Validierung des ersten Zwischenblocks.

Somit wird mittels des zweiten Zwischenblocks, der den ersten Zwischenblock referenziert, ein Verweis hin zu einem früheren Zustand der Blockchain geschaffen.

Auf vorteilhafte Weise kann die Blockchain basierend auf dem zweiten Zwischenblock fortgesetzt werden. Eine Unversehrtheit von in der Blockchain hinterlegten Transaktionen ist mittels des zweiten Zwischenblockes und des ersten Zwischenblockes möglich, selbst wenn zwischen dem ersten Zwischenblock und dem zweiten Zwischenblock generierte Transaktionsblöcke selbst nicht mehr verfügbar sind.

Auf vorteilhafte Weise wird bei dem vorgeschlagenen Verfahren eine aktuelle Transaktion, die dem Blockchain-Netzwerk zur Verfügung gestellt wird und die eingekettet werden soll, mit der Verfügbarkeit des Transaktionsblocks im Blockchain-Netzwerk für alle Knoten verfügbar. Das Verfahren zum Erstellen einer Blockchain mit anpassbarer Anzahl an Transaktionsblöcken betrifft somit insbesondere nicht die Verfügbarkeit der aktuellen Transaktionsblöcke.

Ein Zwischenblock kann analog zu bekannten Erzeugungsverfahren eines Transaktionsblockes, beispielsweise dem Mining, durch das Blockchain-Netzwerk bestätigt werden. Beispielsweise wird ein Zwischenblock mittels eines auf Proof-of-Work oder Proof-of-Stake oder Proof-of-authority basierenden Mechanismus erzeugt.

Insbesondere müssen die Rückbezüge von Zwischenblöcken auf vorherige Zwischenblöcke beim Erzeugen weiterer Blöcke nach einem Zwischenblock nicht in besonderer Weise beachtet werden. Insbesondere erfolgt auch das Validieren und Einketten eines Zwischenblocks in regulärer Weise.

Weitere Knoten, beispielsweise Knoten in einer Cloud, in der das Blockchain-Netzwerk verteilt ist, können somit die Blockchain mit einem oder mehreren Zwischenblöcken regulär behandeln und beachten beispielsweise nur die Referenz auf den vorhergehenden Transaktionsblock des jeweiligen Zwischenblocks.

Die Unversehrtheit einer Blockchain ist aufgrund der Referenzierung des ersten Zwischenblocks im zweiten Zwischenblock ohne zwischen dem ersten und dem zweiten Zwischenblock generierte Blöcke möglich.

Gemäß einer Ausgestaltung ist der erste Zwischenblock ein Genesisblock. Der erste Zwischenblock nimmt in dieser Ausgestaltung eine Sonderrolle ein und ist selbst der Genesisblock. Der zweite Zwischenblock referenziert dann zusätzlich zum Vorgängerblock den Genesisblock. In einer Variante, in der der erste Zwischenblock der Genesisblock ist, kann somit ein Validieren der Blöcke ab dem zweiten Zwischenblock basierend auf der Referenzierung des Genesisblocks erfolgen. Transaktionen, die in Blöcken zwischen dem Genesisblock und dem zweiten Zwischenblock gespeichert sind, werden für ein Nachvollziehen der Unversehrtheit der Blöcke ab dem zweiten Zwischenblock nicht benötigt.

Gemäß einer Ausgestaltung ist ein Genesisblock vorgesehen und ferner wird der erste Zwischenblock generiert, wobei der erste Zwischenblock einen ihm vorhergehenden Block sowie mindestens den Genesisblock referenziert. Auf vorteilhafte Weise kann der erste Zwischenblock je nach Beschaffenheit der Kette oder nach Häufigkeit der generierten Blöcke, insbesondere der generierten Transaktionsblöcke, unabhängig vom Genesisblock als Referenz und Datensatz für die Prüfsummen- oder Hashwertbildung des zweiten Zwischenblocks dienen.

Gemäß einer Ausgestaltung wird zwischen dem ersten Zwischenblock und dem zweiten Zwischenblock mindestens ein Transaktionsblock generiert. Der zweite Zwischenblock wird vorteilhafterweise gemäß einer Vorschrift generiert, die auf die Gegebenheiten einer Blockchain-Anwendung oder die Beschaffenheiten einer Blockchain Rücksicht nimmt und die dementsprechend Zwischenblöcke nach einer gewissen Anzahl an Transaktionsblöcken erzielen möchte. Die Vorschrift kann dabei verschiedenste Mechanismen vorsehen, um dieses Ziel zu erreichen. Je mehr Transaktionsblöcke zwischen den Zwischenblöcken vorgesehen sind, desto mehr Blöcke können bei einer Überprüfung der Blockchain auf Basis der Zwischenblöcke und deren Referenzierung auf vorhergehende Zwischenblöcke außer Acht gelassen werden.

Gemäß einer Ausgestaltung wird für ein Verkürzen der Blockchain zumindest die Anzahl an Transaktions-Blöcken zwischen dem zweiten Zwischenblock und dem ersten Zwischenblock reduziert. Insbesondere werden alle zwischen dem zweiten Zwischenblock und dem ersten Zwischenblock generierten Transaktions-Blöcke entfernt.

Ein oder mehrere Transaktionsblöcke, die sich zwischen dem ersten Zwischenblock und dem zweiten Zwischenblock befinden, werden entfernt, so dass die Größe und damit die benötigte Speicherkapazität der Blockchain auf einem Knoten verringert wird.

Es kann sich bei dem Knoten, der das Verkürzen vornimmt, um einen beliebigen der an dem Blockchain-Netzwerk teilnehmendem Knoten handeln. Vorteilhafterweise sollte auf mindestens einem der teilnehmenden Knoten die gesamte Blockchain inklusive aller Transaktionsblöcke gespeichert werden, um auf die in der verkürzten Blockchain nicht mehr vorhandenen Transaktionsblöcke bei Bedarf zurückgreifen zu können.

Die verkürzte Blockchain ist nach wie vor auf Unversehrtheit oder Authentizität hin überprüfbar, indem die Referenzierung des zweiten Zwischenblockes auf den ersten Zwischenblock genutzt wird. Auf diese Weise kann die Unversehrtheit der Blöcke von einem Genesisblock bis hin zu dem zweiten Zwischenblock überprüft werden, da die Kette durch die Referenzierung auf den ersten Zwischenblock auch durch fehlende Transaktionsblöcke zwischen dem ersten Zwischenblock und dem zweiten Zwischenblock nicht unterbrochen wird. Auf vorteilhafte Weise kann sowohl die Echtheit der in der verkürzten Blockchain noch verfügbaren Transaktionen vor dem ersten Zwischenblock, als auch die der Transaktionen nach dem zweiten Zwischenblock nachvollzogen werden, insbesondere indem eine Prüfsummenbildung über alle Blöcke einschließlich der Zwischenblöcke durchgeführt wird. Da der zweite Zwischenblock auch die Prüfsummen des ersten Zwischenblocks aufweist, ist auch über die Lücke der entfernten Transaktionsblöcke hinweg ein durchgehendes Nachvollziehen der Blockchain mittels Prüfsummen möglich. Somit sind die Transaktionen der nicht entfernten Transaktionsblöcke weiterhin manipulationsgeschützt auch in der verkürzten Blockchain hinterlegt.

Dass dem zweiten Zwischenblock sowie allen weiteren Böcken vertraut werden kann, ist dadurch sichergestellt, dass auch die Zwischenblöcke wie in einem regulären Blockchain-Netzwerk durch den Konsensus Mechanismus der Blockchain bestätigt werden.

Das Verkürzen der Blockchain ist insbesondere für Knoten sinnvoll, welche auf Geräten mit eingeschränkter Speicherkapazität vorgesehen sind. Beispielsweise handelt es sich dabei im industriellen Umfeld um sogenannte Edge-Geräte, welche als Schnittstelle zu einer Cloud dienen und zugleich lokal in einer Industrieanlage für die Anlage relevante Daten bereithalten oder verarbeiten können.

Insbesondere werden alle Transaktionsblöcke zwischen zwei Zwischenblöcken entfernt. Transaktionen zwischen zwei Zwischenblöcken sind lückenlos überprüfbar, wenn alle vorliegen und entsprechend alle Prüfsummen nachgerechnet werden können, wie es in einer herkömmlichen Blockchain der Fall ist. Ein Verkürzen der Blockchain kann daher vorteilhaft in Hinblick auf benötigten Speicherplatz optimiert werden, indem die verkürzte Blockchain keinen Transaktionsblock zwischen dem zweiten Zwischenblock und dem ersten Zwischenblock enthält. In besonderen Fällen, in denen beispielsweise aufgrund der Policy, nach der das Generieren eines Zwischenblocks erfolgt, oder aufgrund eines Ausbleibens von generierten Transaktionsblöcken, zwischen zwei Zwischenblöcken kein Transaktionsblock generiert wurde, kann das Verkürzen analog erfolgen. Ein Zwischenblock enthält in diesem Fall beispielsweise die Prüfsumme über den vorhergehenden Zwischenblock zweifach, einmal aufgrund der Referenzierung des direkten Vorgängerblocks und einmal aufgrund der Referenzierung der vorhergehenden Zwischenblocks. Das Verkürzen der Blockchain erzielt in diesem Spezialfall keine Speicherplatzreduzierung.

Gemäß einer Ausgestaltung wird durch ein an einem verteilten Datenbanksystem teilnehmendes Gerät, insbesondere ein Gerät in einer Cloud oder ein Edge-Gerät oder IoT-Gerät, eine verkürzte Blockchain gespeichert. Auf diese Weise kann ein Gerät mit eingeschränkter Speicherkapazität flexibel eine verkürzte Blockchain speichern, welche weniger Speicherplatz in Anspruch nimmt. Beispielsweise speichert ein Gerät zunächst die ungekürzte Blockchain und verkürzt diese dann durch Löschen von Transaktionsblöcken zwischen beliebigen Zwischenblöcken.

Gemäß einer Ausgestaltung werden für ein Erweitern der Blockchain Transaktionsblöcke zwischen dem ersten Zwischenblock und dem zweiten Zwischenblock aus einer gespeicherten unverkürzten Blockchain abgefragt und eingefügt. Somit kann auf vorteilhafte Weise eine verkürzte Blockchain wieder auf eine unverkürzte erweitert werden. Diese Erweiterung kann für Transaktionsblöcke zwischen ausgewählten Zwischenblöcken oder für alle entfernten Transaktionsblöcke, d.h. für Transaktionsblöcke zwischen allen Zwischenblöcken, zwischen denen zuvor verkürzt wurde, durchgeführt werden.

Gemäß einer Ausgestaltung umfasst ein Referenzieren eines zu referenzierenden Blocks, dass eine Prüfsumme des zu referenzierenden Blocks oder eines Teils des zu referenzierenden Blocks im referenzierenden Block hinterlegt wurde oder gespeichert wird. Bei der Prüfsumme handelt es sich insbesondere um einen Hash-Wert oder um einen kryptographischen Hash-Wert.

Gemäß einer Ausgestaltung beinhalten Zwischenblöcke jeweils keine Transaktion. Ein Zwischenblock wird analog zu dem bekannten Erzeugungsverfahren eines Transaktionsblockes, beispielsweise dem Mining, durch das Blockchain-Netzwerk bestätigt. Lediglich der Inhalt des erzeugten Zwischenbocks beinhaltet in dieser Ausgestaltung keine Nutzdaten. Im Falle einer verkürzten Blockchain verbleiben dann besonders wenige Transaktionsdaten in der verkürzten Blockchain. Als Zwischenblock ist gemäß einer weiteren Variante ein Block zu bezeichnen, der selbst eine Transaktion beinhaltet. Damit kann ein Zwischenblock eine doppelte Funktion einnehmen und einerseits ein Transaktionsblock innerhalb einer Blockchain sein und zugleich durch eine zusätzliche Referenz auf einen früheren Zwischenblock die Funktionalität eines Zwischenblocks einnehmen. Auch die Transaktion eines Zwischenblocks ist manipulationsgeschützt, da auf einen Zwischenblock folgende Transaktionsblöcke auch den Zwischenblock selbst referenzieren und somit eine dort hinterlegte Transaktion einketten. Transaktionen, die in Zwischenblöcken gespeichert werden, werden bei einem Verkürzen der Blockchain jedoch nicht entfernt.

Ein Entfernen von Transaktionsblöcken zwischen allen vorliegenden Zwischenblöcken, beispielsweise zwischen dem Genesisblock und dem ersten Zwischenblock und zwischen dem ersten Zwischenblock und dem zweiten Zwischenblock und zwischen dem zweiten Zwischenblock und einem weiteren Zwischenblock usw. bewirkt, dass in einer verkürzten Blockchain nur dem letzten generierten Zwischenblock nachfolgende Transaktionen vorliegen. Dies ist besonders vorteilhaft in Anwendungen, in denen die Historie von Transaktionsdaten, die vor dem zuletzt generierten Zwischenblock eingekettet wurden, nicht mehr von Interesse ist. In einem solchen Szenario kann besonders viel Speicherplatz freigegeben werden bzw. benötigt die Blockchain besonders wenig Speicherplatz und dennoch sind alle Transaktionsdaten der jüngeren Vergangenheit verfügbar. Der Zeitraum, für den eine Transaktionshistorie verfügbar ist, kann vorteilhaft über die Vorschrift zur Generierung der Zwischenblöcke oder in einer Alternative über die Vorgabe der zu löschenden Transaktionsblöcke gesteuert werden.

Gemäß einer Ausgestaltung werden weitere Zwischenblöcke generiert, wobei ein jeweiliger weiterer Zwischenblock einen jeweils vorhergehenden Block sowie einen jeweils vorhergehenden Zwischenblock referenziert. Das Verfahren kann auf beliebig viele Zwischenblöcke erweitert werden, wobei aufeinanderfolgende Zwischenblöcke jeweils analog zum ersten und zweiten Zwischenblock ausgestaltet sind. Ein dritter Zwischenblock kann somit auf den zweiten folgen, ein vierter Zwischenblock auf den dritten usw.

Gemäß einer Weiterbildung erfolgt das Generieren des zweiten oder eines jeweiligen weiteren Zwischenblocks regelbasiert, beispielsweise zu einem vorgebbaren Zeitpunkt oder in einem vorgebbaren zeitlichen Abstand zu einem vorhergehenden Block oder einem vorgebbaren zeitlichen Abstand zu einem vorhergehenden Zwischenblock oder nach einer vorgebbaren Anzahl an generierten Transaktionsblöcken oder mittels einer kontextbasierten auslösenden Bedingung oder erfolgt manuell. Auf vorteilhafte Weise ist es möglich, die Häufigkeit oder die Regelmäßigkeit generierter Zwischenblöcke über eine Regel zum Generieren der Zwischenblöcke festzulegen. Je nach Anwendungsfall können so Zwischenblöcke derart erzeugt werden, dass flexibel Transaktionsblöcke aus bestimmten Zeitbereichen entfernt werden können.

Beispielsweise können so besonders feingranular die generierten Blöcke aus einer wählbaren Zeitspanne entfernt werden, beispielsweise wenn die Historie der Transaktionen für diesen Zeitabschnitt von geringem Interesse ist. Beispielsweise können die Zwischenblöcke in größeren Abständen erstellt werden, für Anwendungsfälle, für welche erfahrungsgemäß nur die aktuellsten der Transaktionsdaten im Nachhinein auf einem Gerät innerhalb der Automatisierungsanlage von Interesse sind. Durch Entfernen von Transaktionsblöcken aus einem solchen Bereich kann durch eine Aktion zum Löschen zwischen zwei Zwischenblöcken auf einmal eine große Speicherplatzmenge gespart werden.

In anderen Anwendungsfällen kann in kleineren Abständen ein Zwischenblock erzeugt werden, beispielsweise wenn erfahrungsgemäß nur bestimmte Teile der erzeugten Transaktionsblöcke für eine historische Analyse von Interesse sind und andere Teile aus der Historie gelöscht werden können.

Auf vorteilhafte Weise wird ein Zwischenblock erst erzeugt, wenn eine gewisse Anzahl an Transaktionsblöcken erzeugt wurde. Dies bewirkt, dass ein Zwischenblock erst erzeugt wird, wenn ein Entfernen der Transaktionsblöcke bis zum vorhergehenden Zwischenblock eine gewisse Speicherplatzersparnis als Grenzwert übersteigt. Somit wird beispielsweise vermieden, dass ein Entfernen von Transaktionsblöcken zwischen zwei Zwischenblöcken nur wenig Auswirkung auf die Größe oder Länge der gesamten Blockchain hat.

Auf vorteilhafte Weise erfolgt bei einer kontextbasierten Bedingung ein Generieren eines Zwischenblocks in Abhängigkeit von einem Kontext, beispielsweise einem Kontext eines Automatisierungsprojekts. Beispielsweise steuert ein Auftragssystem das Erstellen eines Zwischenblocks. Auf vorteilhafte Weise können so beispielsweise Zwischenblöcke zu Beginn und nach Abschluss einer Charge erstellt werden. Somit kann ein Entfernen von Transaktionsblöcken zwischen Zwischenblöcken oder ebenso das Beibehalten dieser Blöcke in der Blockchain für eine bestimmte Charge oder einen bestimmten Auftrag ausgewählt werden.

Ferner kann beispielsweise ein Zwischenblock erstellt werden, wenn eine neuer Parametereinstellung in einem automatisierten Prozess verwendet wird, beispielsweise nach einem Werkzeugwechsel in einer Werkzeugmaschine oder nach einem Anpassen von Reglern in einer Produktionsmaschine als Reaktion auf Umwelteinflüsse.

Gemäß einer Ausgestaltung referenziert zumindest einer der weiteren Zwischenblöcke mindestens zwei der vorhergehenden Zwischenblöcke, indem in einem Zwischenblock mehrere vorhergehende Zwischenblöcke referenziert werden, beispielsweise indem der Hash-Wert mehrerer vorhergehender Zwischenblöcke den Stand der Blockchain zum jeweiligen Zeitpunkt enthält. Somit wird ein Kürzen der Blockchain ausgehend von dem doppelt referenzierenden Zwischenknoten auf mehrere Längen möglich. D.h. es kann beispielsweise der Abschnitt der Kette zwischen dem doppelt referenzierenden Zwischenknoten und dem älteren referenzierten Zwischenknoten oder zwischen dem doppelt referenzierenden Zwischenknoten und dem jüngeren referenzierten Zwischenknoten aus der Blockchain gelöscht werden.

In einer Weiterbildung kann ein Zwischenblock beispielweise alle vorhergehenden Zwischenblöcke referenzieren. Es erhöht sich zwar einerseits die Komplexität aufgrund der Inflation von Referenzen in dem Zwischenblock, jedoch kann auf diese Weise in einem Vorgang eine sehr große Anzahl an Blöcken, d.h. an Transaktionsblöcken und vorherigen Zwischenblöcken, aus der Blockchain entfernt werden und diese somit effizient verkürzt werden.

Gemäß einer Ausgestaltung referenziert ein jeweiliger Zwischenblock den jeweils vorhergehenden Zwischenblock und ausgewählte Zwischenblöcke referenzieren zusätzlich weitere vorhergehende Zwischenblöcke. Auf diese Weise kann ein Kompromiss geschaffen werden, so dass einerseits die Menge an Referenzen nicht inflationär mit neu generierten Zwischenblöcken steigt und dennoch ausgewählte Zwischenblöcke zwei oder mehr vorhergehende Zwischenblöcke referenzieren.

Gemäß einer Ausgestaltung wird als ausgewählter Zwischenblock ein Zwischenblock zu einem vorgebbaren Zeitpunkt oder in einem vorgebbaren zeitlichen Abstand zu einem vorhergehenden oder zuvor ausgewählten Zwischenblock oder nach einer vorgebbaren Anzahl an generierten Transaktionsblöcken oder Zwischenblöcken oder mittels einer kontextbasierten auslösenden Bedingung oder manuell generiert. Die Mechanismen, die das Generieren eines ausgewählten Zwischenblocks mit doppelter oder mehrfacher Referenzierung auslösen, können analog zur Erstellung eines Zwischenblocks gewählt werden.

Die Erfindung betrifft ferner ein Speichermedium eines an einem verteilten Datenbanksystem teilnehmenden Gerätes, insbesondere eines Gerätes in einer Cloud oder eines Edge-Gerätes oder IoT-Gerätes, aufweisend eine Blockchain mit Blöcken umfassend eine anpassbare Anzahl an Transaktionsblöcken und mehrere Zwischenblöcke,
- wobei die Blockchain Bestandteil des verteilten Datenbank-Systems ist;
- wobei ein jeweiliger Block einen jeweiligen vorhergehenden Block referenziert;
- aufweisend einen ersten Zwischenblock und mindestens einen zweiten Zwischenblock;
- wobei der zweite Zwischenblock einen ihm vorhergehenden Block sowie mindestens den ersten Zwischenblock referenziert.

Gemäß einer Ausgestaltung ist das Speichermedium auf einem Edge-Gerät oder einem IoT-Gerät ausgeführt und hat eine gemäß dem oben beschriebenen Verfahren verkürzte Blockchain gespeichert.

Auf vorteilhafte Weise wird im Blockchain-Netzwerk eine Blockchain mit den beschriebenen Zwischenblöcken generiert, verteilt, bestätigt, dezentral verwaltet oder gespeichert. Ein Knoten des Blockchain-Netzwerkes kann somit auf beliebige Weise entscheiden, ob er eine vollständige Blockchain inklusive der generierten Transaktionsblöcke und Zwischenblöcke speichert, oder ob er die Blockchain gemäß dem beschriebenen Verfahren verkürzt und die verkürzte Blockchain speichert. Insbesondere Knoten des Netzwerkes, welche eine eingeschränkte Speicherkapazität zur Verfügung haben, wie beispielsweise Edge-Geräte oder IoT-Geräte innerhalb von Automatisierungsanlagen, können auf vorteilhafte Weise die verkürzte Blockchain speichern.

Gemäß einer Ausgestaltung ist das Speichermedium auf einem Edge-Gerät oder IoT-Gerät ausgeführt und hat eine gemäß dem oben beschriebenen Verfahren erweiterte Blockchain gespeichert. Vorteilhafterweise ist im Blockchain-Netzwerk mindestens ein Knoten vorgesehen, welcher verlässlich die gesamte Blockchain speichert. In einer Automatisierungsanlage, welche an eine Cloud angeschlossen ist, kann dies ein Blockchain-Knoten des Anlagenbetreibers sein oder ein Blockchain-Knoten des Cloud-Dienstes, für welchen ein Anlagenbetreiber Regeln festlegt, und welcher die gesamte Blockchain inklusive aller Transaktionsblöcke speichert. Von diesem kann dann beispielsweise ein Gerät der Automatisierungsanlage, welches nur eine verkürzte Blockchain gespeichert hat, die in der verkürzten Blockchain nicht enthaltenen Transaktionsblöcke erfragen und diese wieder in die Blockchain einbinden. Insbesondere kann bei diesem Vorgang überprüft werden, ob alle angefragten und bereitgestellten Transaktionsblöcke unversehrt und unmanipuliert vorliegen, indem die Prüfsummen der Blöcke nachvollzogen werden. Auf diese Weise erhält das Gerät mit gespeicherter verkürzter Blockchain nach dem Einbinden der Blöcke aus der vollständigen Blockchain wieder die erweiterte Blockchain. Dabei können alle entfernten Blöcke angefragt werden oder nur Teile, so dass die Blockchain erweitert, allerdings immer noch gegenüber der vollständigen Blockchain reduziert auf dem Edge-Gerät oder IoT-Gerät vorliegt.

Die Erfindung betrifft ferner ein Edge-Gerät aufweisend ein Speichermedium gemäß einem der oben beschriebenen Ausgestaltungen des Speichermediums.

Die Erfindung betrifft ferner ein Computer-Programmprodukt mit einem Computer-Programm, das Mittel zur Durchführung des Verfahrens nach einem der oben beschriebenen Ausgestaltungen aufweist, wenn das Computer-Programm auf einer programmgesteuerten Einrichtung zur Ausführung gebracht wird.

Die Erfindung wird nachfolgend von Beispielen mit Hilfe der Figuren näher erläutert. Es zeigen:
Figur 1 eine schematische Darstellung zweier Blockchains gemäß einem ersten Ausführungsbeispiel;
Figur 2 eine schematische Darstellung zweier Blockchains gemäß einem zweiten Ausführungsbeispiel der Erfindung;

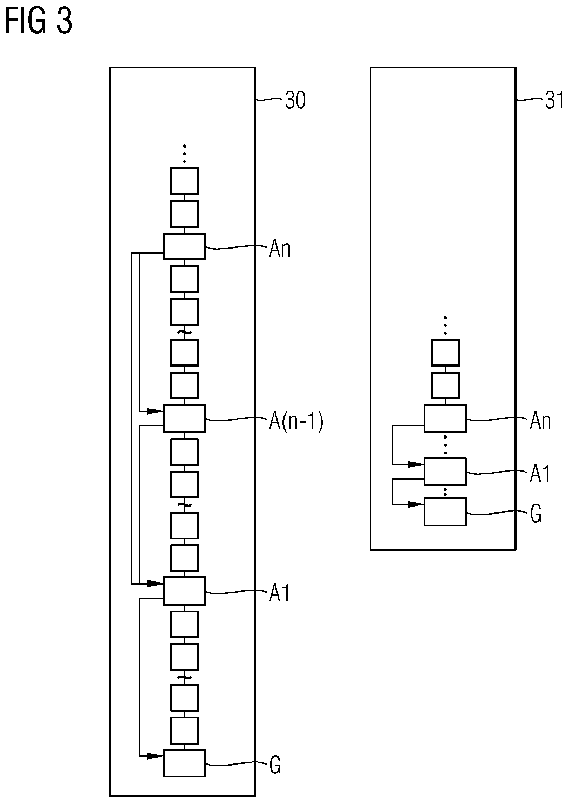

Figur 3 eine schematische Darstellung zweier Blockchains gemäß einem dritten Ausführungsbeispiel der Erfindung;
Figur 4 eine schematische Darstellung zweier Blockchains gemäß einem vierten Ausführungsbeispiel der Erfindung;
Figur 5 eine schematische Darstellung von Blockchain-Netzwerkknoten innerhalb einer Cloud-Umgebung und Blockchain-Netzwerkknoten in einer Automatisierungsanlage.

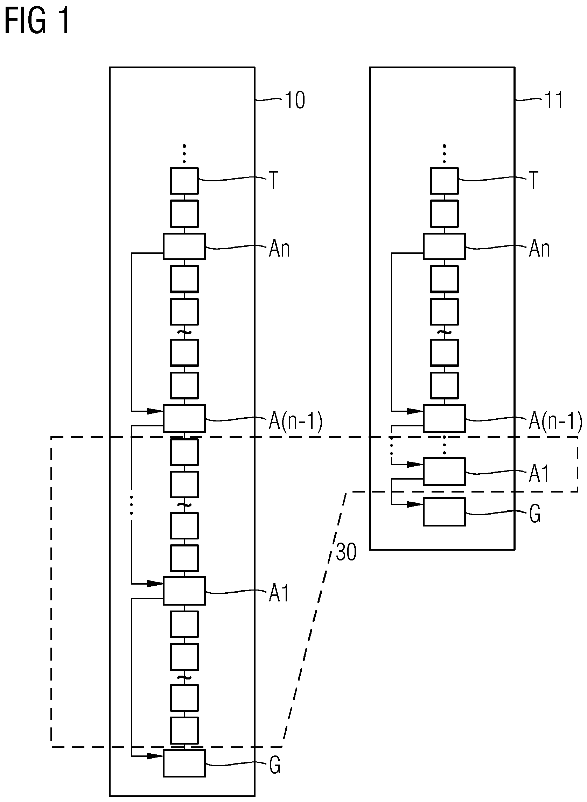

Gemäß einem ersten Ausführungsbeispiel der Erfindung wird eine Blockchain derart generiert, dass neben regulären Transaktionsblöcken in regelmäßigen Abständen Zwischenblöcke generiert werden. Dabei basiert die Blockchain auf einem Genesisblock G. Transaktionsblöcke werden basierend auf dem Genesisblock G erstellt und in die Blockchain eingekettet. In der Figur 1 ist ein solcher Transaktionsblock T beispielshalber gekennzeichnet. Der Einfachheit halber wurde nur ein Transaktionsblock zur Veranschaulichung mit einem Bezugszeichen versehen. Nach einem vorgebbaren und flexibel wählbaren zeitlichen Abstand zum Genesisblock G wird ein erster Zwischenblock A1 erstellt. Dieser beinhaltet selbst keine Transaktion, wird jedoch ähnlich einem Transaktionsblock erstellt, als broadcast an das Blockchain-Netzwerk gesendet, durch einen in der Blockchain verwendeten Konsensus-Mechanismus bestätigt und in die Blockchain eingekettet. Dabei referenziert er wie üblich direkt den vorhergehenden Transaktionsblock sowie zusätzlich den Genesisblock G.

Wird der erste Zwischenblock A1 erfolgreich durch teilnehmende Knoten am verteilten Datenbanksystem, welches die Blockchain verwendet, bestätigt, insbesondere durch sog. Mining, so setzt der erste Zwischenblock A1 die Blockchain wie ein regulärer Block fort.

In einem gewissen zeitlichen Abstand zum ersten Zwischenblock A1 werden weitere Zwischenblöcke generiert. In dieser Folge wird auch der (n-1)-te Zwischenblock Aₙ₋₁ generiert. Wiederum in zeitlichem Abstand dazu wird der n-te Zwischenblock A_{N} generiert. Die so erzeugte Blockchain 10 wird gemäß dem ersten Ausführungsbeispiel der Erfindung innerhalb eines Blockchain-Netzwerks, zum Beispiel innerhalb eines privaten Blockchain-Netzwerkes, verteilt. Beispielsweise ist ein Blockchain-Netzwerk innerhalb einer Zusammenkunft aus Unternehmen vorgesehen, welche für die Produktion eines Produktes auf verschiedenen Betriebsstufen zusammenarbeiten. Die vollständige Blockchain 10 ist dabei beispielsweise in je einem Knoten der beteiligten Firmen gespeichert.

Ebenfalls Bestandteil des Blockchain-Netzwerkes sind Knoten einzelner Firmen, welche sich innerhalb eines Automatisierungsnetzwerkes befinden. Dieses ist mit dem Blockchain-Netzwerk NW verbunden. Beispielsweise ist einer der Knoten des Blockchain-Netzwerkes auf einem Iot-Gerät vorgesehen. Auf diesem IoT-Gerät ist der zur Verfügung stehende Speicherplatz limitiert. Beispielsweise nimmt das IoT-Gerät Steuerungsaufgaben innerhalb der Anlage war und ist zugleich mit einem Office- oder IT-Netzwerk verbunden. Das IoT-Gerät ist insbesondere über das Internet ansprechbar. Das IoT-Gerät greift auf die Blockchain zu, um beispielsweise Transaktionen für ein aktuelles Automatisierungsprojekt oder für eine aktuelle Charge manipulationsgeschützt verfügbar zu haben. Diese Transaktionsdaten können beispielsweise aus Parametersätzen oder Konfigurationsparametern bestehen.

Ebenso können die Transaktionsdaten Bestelldaten eines Auftrages umfassen. Beispielsweise interessiert für das IoT-Gerät ein Bereich der Blockchain, welcher Transaktionsdaten enthält, die nach dem (n-1)-ten Zwischenblock Aₙ₋₁ erstellt wurden.

Auf vorteilhafte Weise kann das IoT-Gerät eine verkürzte Blockchain 11 speichern. Dafür werden Transaktionsblöcke, welche zeitlich vor dem (n-1)-ten Zwischenblock erstellt wurden, aus der Blockchain entfernt. Die Zwischenblöcke bleiben dabei in der Blockchain erhalten. Somit entsteht eine Kette aus dem Genesisblock G, dem ersten Zwischenblock A₁, ggf. weiteren Zwischenblöcken, dem (n-1)-ten Zwischenblock Aₙ₋₁ und daran anschließenden Transaktionsblöcken. Eine derart verkürzte Blockchain 11 und die darin enthaltenen aktuellen Transaktionsblöcke können ausgehend vom Genesisblock G validiert werden, indem die Prüfsummenbildung über die einzelnen Blöcke nachvollzogen werden kann. Aufgrund der Einbeziehung der Prüfsummen von einem jeweiligen vorhergehenden Zwischenblock in einem Zwischenblock, ist die Kette an Blöcken, wie sie in der verkürzten Blockchain 11 enthalten ist, validierbar.

Der benötigte Speicherplatz für die verkürzte Blockchain 11 ist um die Größe aller entfernten Transaktionsblöcke reduziert worden. Sowohl das Generieren des (n-1)-ten Zwischenblocks Aₙ₋₁ als auch dessen Auswahl als Zwischenblock zum Löschen vorhergehender Transaktionsblöcke kann angepasst an das Automatisierungsprojekt erfolgen. Hängt das Generieren der Zwischenblocks von einem wählbaren zeitlichen Abstand zu vorherigen Zwischenblocks ab, so kann beim Kürzen der Blockchain entsprechend ein Zwischenblock ausgewählt werden, welcher vor dem interessierenden Abschnitt der Blockchain generiert wurde.

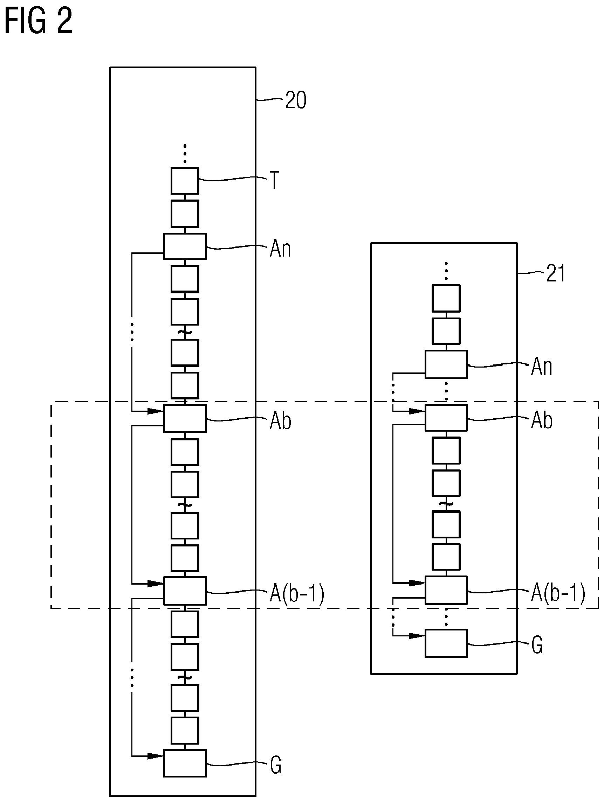

In Figur 2 ist ein zweites Ausführungsbeispiel der Erfindung dargestellt, bei welchem eine Blockchain 20 ähnlich zu der im Rahmen von Figur 1 beschriebenen Blockchain 10 erstellt wird. Im Unterschied zum ersten Ausführungsbeispiel wird für das Verkürzen der Blockchain 20 durch das Entfernen von Transaktionsblöcken vor dem Zwischenblock Aₙ ein Abschnitt der Blockchain vom Entfernen der Zwischenblöcke ausgenommen. Transaktionsblöcke, welche zwischen dem (b-1)-ten Zwischenblock A_{b-1} und dem b-ten Zwischenblock A_{b} liegen, werden gemäß dem zweiten Ausführungsbeispiel der Erfindung nicht entfernt. Somit wird eine verkürzte Blockchain 21 erstellt, welche ältere Transaktionsblöcke, die vor dem Zwischenblock Aₙ generiert wurden, bis auf diejenigen zwischen dem (b-1)-ten Zwischenblock A_{b-1} und dem b-ten Zwischenblock A_{b} entfernt.

Somit wird die Blockchain 20 effektiv zu einer verkürzten Blockchain 21 reduziert und dabei der Speicherplatz eingespart, welcher durch die entfernten Transaktionsblöcke frei wird. Jedoch wird ein Zeitbereich gezielt ausgenommen, so dass Transaktionsblöcke aus diesem Zeitbereich auch in der verkürzten Blockchain 21 verfügbar sind. Beispielsweise werden so in der verkürzten Blockchain 21 sogenannte Golden Batches, welche aus der Verfahrenstechnik bekannt sind und eine Messlatte für aktuelle Produktionschargen darstellen, als abrufbare Transaktionsdaten in der Blockchange beibehalten um einen entsprechenden Vergleich der Batch-Daten auch in der verkürzten Blockchain durchführen zu können. Zusätzlich werden beispielsweise die jüngsten Transaktionsdaten als Historie beibehalten, welche nach dem Zwischenblock Aₙ generiert wurden.

Gemäß einem dritten Ausführungsbeispiel der Erfindung wird eine Blockchange 30 derart erstellt, dass beispielsweise der n-te Zwischenblock Aₙ neben dem direkt vorhergehenden Transaktionsblock und dem zuletzt generierten (n-1)-ten Zwischenblock Aₙ-1 zusätzlich beispielsweise den ersten Zwischenblock A₁ referenziert. In einer Variante referenziert der n-te Zwischenblock Aₙ noch weitere Zwischenblöcke (nicht abgebildet). Bei einem Verkürzen der Blockchain 30 auf eine verkürzte Blockchain 31 können so zwischen einem ausgewählten Zeitbereich, beispielsweise zwischen dem ersten Zwischenblock A₁ und dem n-ten Zwischenblock Aₙ, neben den Transaktionsblöcken aus diesem Zeitraum auch die generierten Zwischenblöcke in diesem Zeitraum, insbesondere der ₙ₋₁te Zwischenblock Aₙ₋₁ entfernt werden.

Die vollständige Überprüfbarkeit der Blockchain-Kette ist in der verkürzten Blockchain 31 durch die Referenz des n-ten Zwischenblocks Aₙ auf den ersten Zwischenblock A₁ dennoch sichergestellt. Vorteilhafterweise ist es vorgesehen, dass nicht alle Zwischenblöcke mehrere vorhergehende Zwischenblöcke referenzieren, um eine Inflation von Referenzen und damit verbundene Komplexität zu vermeiden. In größeren zeitlichen Abständen kann jedoch ein solcher Zwischenblock vorgesehen sein, welcher insbesondere einen zusätzlichen Zwischenblock als Prüfsumme enthält.

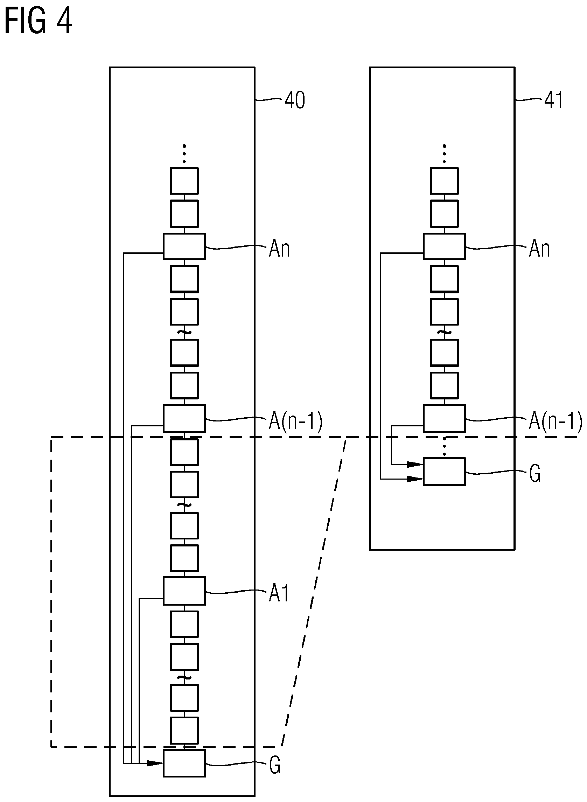

In Figur 4 ist eine weitere mögliche Alternative gezeigt, eine Blockchain 40 mit Zwischenblöcken zu erstellen. Dabei referenzieren mehrere oder insbesondere alle der generierten Zwischenblöcke auch den Genesisblock G. Eine verkürzte Blockchain 41 kann dann derart generiert werden, dass Transaktionsdaten vor einem (n-1)-ten Zwischenblock Aₙ₋₁ entfernt werden. Damit wird die Blockchain automatisch auf die kleinstmögliche Länge verkürzt. Diese Ausgestaltung kann für Anwendungsfälle interessant sein, in welchen Transaktionsdaten in einer Anfangsphase der Blockchain irrelevant sind, beispielsweise weil es sich um Testdaten oder Testkonfigurationsdatensätze handelt, auf welche im weiteren Verfahren nicht zurückgegriffen werden soll, beispielsweise weil sie zu schlechten oder nicht optimierten Anlagenbedingungen führen.

Die in den Ausführungsbeispielen 1 bis 4 beschriebenen Möglichkeiten der Referenzierung von Zwischenblöcken und entsprechenden Möglichkeiten zum Verkürzen der Blockchain können auch kombiniert eingesetzt werden. Beispielsweise können verschiedene Mechanismen zum Generieren der Zwischenblöcke zu verschiedenen zeitlichen Abschnitten der Blockchain verwendet werden. Ebenfalls kann der Trigger-Mechanismus zum Erstellen eines Zwischenblocks innerhalb einer Blockchain variieren. Beispielsweise kann bei Beginn einer Blockchain, welche beim Anlaufen einer Automatisierungsanlage neu aufgebaut wird, ein fester zeitlicher Abstand vorgegeben sein, während hingegen im weiteren Verlauf Zwischenblöcke kontextbasiert getriggert werden.

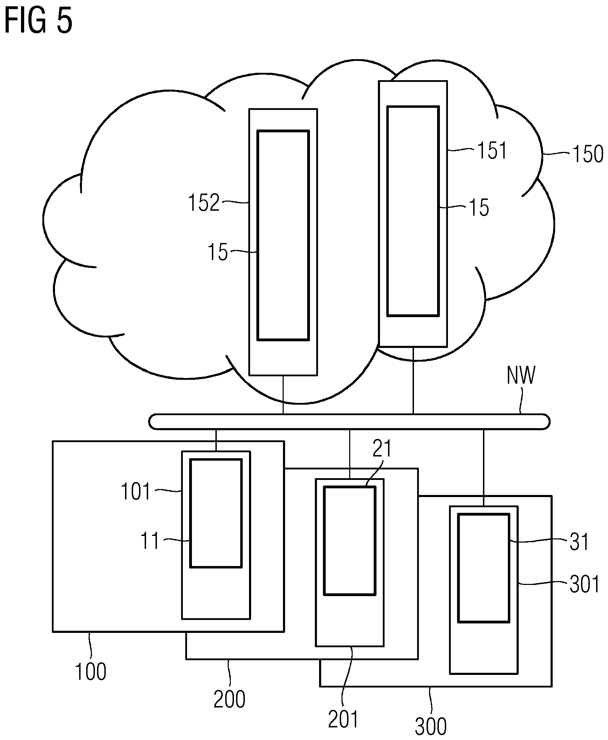

Anhand von Figur 5 wird veranschaulicht, wie gekürzte Blockchains 11, 21, 31 in einem Anwendungsszenario einer Automatisierungsanlage zum Einsatz kommen. Figur 5 zeigt ein Blockchain-Netzwerk NW bestehend aus Blockchain-Nodes oder Blockchain-Knoten 151, 152, 101, 201, 301. Aus Darstellungsgründen wurden lediglich fünf an dem Blockchain-Netzwerk NW teilnehmende Knoten abgebildet. Insbesondere in einer Cloud 150, welche in der oberen Hälfte der Abbildung Figur 5 dargestellt ist, nehmen eine Vielzahl von Knoten teil. Die Knoten 151, 152 in der Cloud 150 sind über das Blockchain-Netzwerk NW mit Knoten innerhalb einer Automatisierungsanlage 101, 201, 301 verbunden.

Die Knoten der Automatisierungsanlagen sind in der unteren Hälfte der Figur 5 abgebildet. Es kann sich dabei beispielsweise um eine Industrieanlage handeln, in welcher die Knoten 101, 201, 301 räumlich nah beieinanderliegen und auf verschiedenen Geräten 100, 200, 300 der Automatisierungsanlage ausgebildet sind. Ebenso können die Knoten in mehreren räumlich getrennten Anlagen vorgesehen sein, welche beispielsweise zu einem Unternehmen gehören. Ferner könnten die in Figur 5 dargestellten Knoten in Netzwerken unterschiedlicher Unternehmen vorgesehen sein.

Veranschaulicht werden soll anhand der Figur 5, dass für Knoten in der Cloud 150 in der Regel ausreichender Speicherplatz zur Verfügung steht. In Knoten auf Geräten 100, 200, 300 innerhalb von Automatisierungsanlagen ist vorhandener Speicher hingegen oftmals ein limitierender Faktor.

Beispielsweise ist in einer ersten Automatisierungsanlage ein Edge-Gerät 100 vorgesehen, welches als Gateway zwischen einem Automatisierungsnetzwerk, welches die Steuerung von Automatisierungsgeräten regelt, und einem Kommunikationsnetzwerk in der Cloud 150 dient. Das Edge-Gerät 100 sammelt dabei Daten des Automatisierungssystems, welche für einen Service in der Cloud 150 genutzt werden können. Beispielsweise werden auf diese Weise Monitoringdaten gesammelt, welche einer Big Data-Analyse in der Cloud 150 zur Verfügung gestellt werden sollen. Beispielsweise bearbeitet das Edge-Gerät 100 die gesammelten Daten vor, bevor es diese in die Cloud sendet. Dabei werden beispielsweise die aufgezeichneten Daten anonymisiert oder es werden Daten aus bestimmten Zeitabschnitten gesammelt oder nach Zeitabschnitten sortiert zur Verfügung gestellt.

In einer anderen Automatisierungsanlage ist beispielsweise ein ... Edge-Gerät 200 vorgesehen, welches zusätzlich für einen verschlüsselten Austausch mit dem Cloud-Service zuständig ist.

In einer weiteren Automatisierungsanlage ist beispielsweise ein IoT-Gerät 300 vorgesehen, welches beispielsweise einen Verpackungsprozess steuert und zugleich eine Kommunikationsverbindung zu einem Logistikanbieter über eine Internet-Verbindung aufweist.

Dem Edge-Gerät 100, dem Edge-Gerät 200 und dem IoT-Gerät 300 ist dabei gemeinsam, dass der vorhandene Speicherplatz limitiert ist. Die Geräte haben somit ein Interesse daran, Speicherplatz einzusparen. Auf den Geräten ist zusätzlich gemäß dem fünften Ausführungsbeispiel der Erfindung eine Blockchain-Anwendung implementiert. Dabei sollen jeweils Daten, welche Bedienaktionen oder Qualitätskenner betreffen, über eine Blockchain abgesichert werden. Diese Daten sollen nachweislich unmanipuliert in der Blockchain vorliegen.

Zugleich werden die beschriebenen Geräte, das Edge-Gerät 100, das Edge-Gerät 200 und das IoT-Gerät 300, in der Produktion und Verarbeitung eines Produktes automatisierungsnah verwendet. D.h. dass in der Regel eine eher jüngere Historie an erfassten Daten lokal relevant ist. Daten aus diesem Kurzzeitarchiv sollten somit vorteilhafterweise auf dem jeweiligen Gerät verfügbar sein. Zugleich soll die Blockchain auf dem jeweiligen Gerät aber auch möglichst wenig Speicherplatz beanspruchen. Diese Herausforderung wird dadurch gelöst, dass der jeweilige Knoten 101, 201, 301 auf dem jeweiligen Gerät 100, 200, 300 jeweils eine verkürzte Blockchain 11, 21, 31 speichert. Als verkürzte Blockchain 11, 21, 31 kommen die oben beschriebenen Blockchains in Frage.

Es gibt mehrere Möglichkeiten, wie ein jeweiliger Knoten 101, 201, 301 zu einer verkürzten Blockchain gelangt. Beispielsweise kann solange ausreichend Speicher vorhanden ist, die Blockchain regulär und ohne diese zu verkürzen, beibehalten werden. Sobald ein gewisser Anteil an Speicherplatz durch die Blockchain belegt wird, wird ein Mechanismus ausgelöst zum Verkürzen der Blockchain. Bei diesem Verfahren hat ein jeweiliger Knoten auf dem jeweiligen Automatisierungsgerät solange die größtmögliche Anzahl an Transaktionsblöcken und damit auch an vorgenommenen Transaktionen, wie beispielsweise aufgezeichneten Qualitätsdaten verfügbar, bis der vorhandene Speicherplatz nicht mehr ausreicht. Ab diesem Zeitpunkt kann beispielsweise regelmäßig ein Teil der Blockchain gelöscht werden oder beispielsweise einmalig ein größerer Abschnitt der Blockchain gelöscht werden, bis der Schwellenwert für die Speicherplatzbelegung wiederum überschritten wird.

In einer anderen Variante fragt ein Knoten 101 aus einer Automatisierungsanlage einen Stand einer Blockchain regelmäßig aus dem Netzwerk ab, beispielsweise indem er mit einem Knoten 152 in der Cloud kommuniziert und entfernt dabei zugleich die irrelevanten Transaktionsblöcke. Auf diese Weise wird quasi von vornherein eine verkürzte Blockchain auf dem Edge-Gerät 100 gespeichert.

Auf vorteilhafte Weise wird verhindert, dass eine Blockchain auf einem Knoten, welcher ein Verkürzen der Blockchain vornimmt, stetig anwächst und so ein Überlaufen des Speichers verursacht.

Insbesondere bei Zwischenblöcken, welche selbst keine Transaktionen beinhalten, sondern nur die Referenz auf dem letzten Block sowie den Vorgängerzwischenblock, ist der Footprint eines Zwischenblocks konstant klein. Das Anwachsen von aneinander geketteten Zwischenblöcken stellt auch für Geräte mit eingeschränkten Ressourcen kein Risiko mehr dar.

Das Löschen von Blöcken erfolgt vorteilhafterweise lokal auf einem Blockchain-Knoten. Insbesondere können somit beliebig viele im Blockchain-Netzwerk NW befindlichen Geräte mit ihren spezifischen Einschränkungen im Hinblick auf vorhandene Ressourcen flexibel unterschiedliche Zeitbereiche aus der lokal gespeicherten Blockchain entfernen. Man kann bei der verkürzten Blockchain auch von einer stripped-Blockchain und dem Knoten mit der verkürzten Blockchain von einem stripped-node sprechen.

Die vorgeschlagene Erfindung ermöglicht ein gezieltes Löschen und zugleich ein bewusstes Beibehalten von relevanten Nutzdaten, die in einer Blockchain gespeichert werden in einem gewählten Zeitraum, welcher durch Zwischenblöcke bestimmt werden kann.

Eine verkürzte Blockchain oder ein stripped Node ist in der Lage, bereits gelöschte Blöcke von einer vollständigen Blockchain oder einem Full Nodes wieder anzufordern und in die entsprechenden Bereiche zwischen den für das Löschen ausgewählten Zwischenblöcken einzuketten. Dies ist besonders vorteilhaft, wenn Daten aus dem entfernten Bereich der Blockchain für eine spätere Analyse relevant werden, beispielsweise weil ein Kunde eines Produkts, das einer Charge entstammt, Information zur Supply Chain erhalten möchte. Ferner können die Daten aus dem entfernten Bereich auch für eine Konfiguration einer Steuerungsanlage als Referenzdaten benötigt werden.

Zugleich ist auch auf den verkürzten Blockchains sichergestellt, dass aktuelle Transaktionen lokal verfügbar sind. Abgesehen davon, dass die Zwischenblöcke für das Entfernen flexible wählbar sind und somit aktuellere Zwischenblöcke nicht ausgewählt werden müssen, ist der Zeitbereich, der nach dem zuletzt generierten Zwischenblock generiert wurde, vom Löschen der Daten ausgenommen.

Aktuelle Transaktionen sind somit mit Verfügbarkeit ihres Blocks im Blockchain-Netzwerk sofort überall verfügbar, d.h. eine Abfrage der aktuellsten Produktionsdaten ist über die Cloud ebenso möglich wie die der historischen Daten.

Historische Informationen innerhalb eines Blockchain-Netzwerkes müssen somit nur in Blockchain Nodes vorhanden sein, in denen sie auch relevant sind, beispielsweise auf Langzeitarchiv-Servern oder in einer Cloud. Zugleich erfolgt ein Starten beispielsweise eines IoT-Gerätes, welches eine reduzierte oder gestrippte Blockchain Node betreibt, deutlich schneller, weil gelöschte Blockchain-Bereiche nicht geladen werden müssen.

## Patentansprüche

1. Computerimplementiertes Verfahren zum Erstellen einer Blockchain (10, 11, 20, 21, 30, 31, 40, 41) mit Blöcken umfassend eine anpassbare Anzahl an Transaktions-Blöcken (T) und mehrere Zwischenblöcke (A1, A(b-1), Ab, A(n-1), An),
- wobei die Blockchain (10, 11, 20, 21, 30, 31, 40, 41) Bestandteil eines verteilten Datenbanksystems (NW) ist;
- wobei Blöcke innerhalb der Blockchain (10, 11, 20, 21, 30, 31, 40, 41) generiert werden und ein jeweiliger Block einen jeweiligen vorhergehenden Block referenziert,
- wobei ein erster Zwischenblock (A1, G) vorgesehen ist;
- wobei mindestens ein zweiter Zwischenblock (A2) generiert wird,
- wobei der zweite Zwischenblock (A2) einen ihm vorhergehenden Block sowie mindestens den ersten Zwischenblock (A1, G) referenziert.

2. Verfahren nach Anspruch 1, wobei der erste Zwischenblock ein Genesisblock (G) ist.

3. Verfahren nach Anspruch 1, wobei ein Genesisblock (G) vorgesehen ist und ferner der erste Zwischenblock (A1) generiert wird, wobei der erste Zwischenblock (A1) einen ihm vorhergehenden Block sowie mindestens den Genesisblock (G) referenziert.

4. Verfahren nach einem der vorstehenden Ansprüche, wobei zwischen dem ersten Zwischenblock (A1) und dem zweiten Zwischenblock (A2) mindestens ein Transaktionsblock generiert wird.

5. Verfahren nach einem der vorstehenden Ansprüche, wobei für ein Verkürzen der Blockchain (10, 11, 20, 21, 30, 31, 40, 41) zumindest die Anzahl an Transaktions-Blöcken zwischen dem zweiten Zwischenblock (A2) und dem ersten Zwischenblock (G, A1) reduziert wird, insbesondere alle zwischen dem zweiten Zwischenblock (A2) und dem ersten Zwischenblock (G, A1) generierten Transaktions-Blöcke entfernt werden.

6. Verfahren nach einem der vorstehenden Ansprüche, wobei durch ein an einem verteilten Datenbanksystem (NW) teilnehmendes Gerät (100, 200, 300), insbesondere ein Gerät in einer Cloud oder ein Edge-Gerät oder IoT Gerät, eine verkürzte Blockchain gespeichert wird.

7. Verfahren nach einem der vorstehenden Ansprüche, wobei für ein Erweitern der Blockchain (10, 11, 20, 21, 30, 31, 40, 41) Transaktionsblöcke zwischen dem ersten Zwischenblock (G, A1) und dem zweiten Zwischenblock (A2) aus einer gespeicherten unverkürzten Blockchain abgefragt werden und eingefügt werden.

8. Verfahren nach einem der vorstehenden Ansprüche, wobei ein Referenzieren eines zu referenzierenden Blocks umfasst, dass eine Prüfsumme des zu referenzierenden Blocks oder eines Teils des zu referenzierenden Blocks im referenzierenden Block hinterlegt oder gespeichert wird.

9. Verfahren nach einem der vorstehenden Ansprüche, wobei der erste Zwischenblock (G, A1) und der zweite Zwischenblock (A2) jeweils keine Transaktion beinhalten.

10. Verfahren nach einem der vorstehenden Ansprüche, wobei weitere Zwischenblöcke (A(b-1), Ab, A(n-1), An) generiert werden, wobei ein jeweiliger weiterer Zwischenblock (A(b-1), Ab, A(n-1), An) einen jeweils vorhergehenden Block sowie einen jeweils vorhergehenden Zwischenblock referenziert.

11. Verfahren nach einem der vorstehenden Ansprüche, wobei das Generieren des zweiten (A2) oder eines jeweiligen weiteren Zwischenblocks (A(b-1), Ab, A(n-1), An) regelbasiert, insbesondere zu einem vorgebbaren Zeitpunkt oder in einem vorgebbaren zeitlichen Abstand zu einem vorhergehenden Block oder einem vorgebbaren zeitlichen Abstand zu einem vorhergehenden Zwischenblock oder nach einer vorgebbaren Anzahl an generierten Transaktionsblöcken oder mittels einer kontextbasierten auslösenden Bedingung, erfolgt oder manuell erfolgt.

12. Verfahren nach einem der Ansprüche 10 oder 11, wobei zumindest einer der weiteren Zwischenblöcke (A(b-1), Ab, A(n-1), An) mindestens zwei der vorhergehenden Zwischenblöcke referenziert.

13. Verfahren nach einem der vorstehenden Ansprüche, wobei ein jeweiliger Zwischenblock den jeweils vorhergehenden Zwischenblock referenziert und wobei ausgewählte Zwischenblöcke zusätzlich weitere vorhergehende Zwischenblöcke referenzieren.

14. Verfahren nach Anspruch 13, wobei als ausgewählter Zwischenblock ein Zwischenblock zu einem vorgebbaren Zeitpunkt oder in einem vorgebbaren zeitlichen Abstand zu einem vorhergehenden oder zuvor ausgewählten Zwischenblock oder nach einer vorgebbaren Anzahl an generierten Transaktionsblöcken oder Zwischenblöcken oder mittels einer kontextbasierten auslösenden Bedingung oder manuell generiert wird.

15. Speichermedium eines an einem verteilten Datenbanksystem (NW) teilnehmenden Gerätes (100, 200, 300), insbesondere eines Gerätes in einer Cloud oder eines Edge-Gerätes oder IoT Gerätes, aufweisend eine Blockchain (10, 11, 20, 21, 30, 31, 40, 41) mit Blöcken umfassend eine anpassbare Anzahl an Transaktions-Blöcken und mehrere Zwischenblöcke,
- wobei die Blockchain (10, 11, 20, 21, 30, 31, 40, 41) Bestandteil des verteilten Datenbanksystems (NW) ist;
- wobei ein jeweiliger Block einen jeweiligen vorhergehenden Block referenziert,
- aufweisend einen ersten Zwischenblock (A1, G) und mindestens einen zweiten Zwischenblock (A2),
- wobei der zweite Zwischenblock (A2) einen ihm vorhergehenden Block sowie mindestens den ersten Zwischenblock (A1, G) referenziert.

16. Speichermedium gemäß Anspruch 15, wobei das Speichermedium auf einem Edge-Gerät oder einem IoT-Gerät ausgeführt ist und eine gemäß Anspruch 5 verkürzte Blockchain gespeichert hat.

17. Speichermedium gemäß Anspruch 15, wobei das Speichermedium auf einem Edge-Gerät oder IoT-Gerät ausgeführt ist und eine gemäß Anspruch 7 erweiterte Blockchain gespeichert hat.

18. Edge-Gerät aufweisend ein Speichermedium gemäß einem der Ansprüche 15-17.

19. Computerprogrammprodukt mit einem Computerprogramm, das Mittel zur Durchführung des Verfahrens nach einem der Ansprüche 1 bis 14 aufweist, wenn das Computerprogramm auf einer programmgesteuerten Einrichtung zur Ausführung gebracht wird.
